# EUROPÄISCHE PATENTSCHRIFT

(11) **EP 0 712 331 B1**
(45) Veröffentlichungstag und Bekanntmachung des Hinweises auf die Patenterteilung: **18.11.1998**
(21) Anmeldenummer: 95922477.5
(22) Anmeldetag: 23.05.1995
(51) Int. Cl.: B01J 2/20, B29B 9/10

(54) **VORRICHTUNG ZUM STREIFEN- ODER TROPFENFÖRMIGEN AUSBRINGEN FLIESSFÄHIGER MASSEN AUF EIN TRANSPORTBAND**
DEVICE FOR DISCHARGING FREE-FLOWING MATERIAL IN STRIP OR DROP FORM ONTO A CONVEYOR BELT
DISPOSITIF PERMETTANT DE CHARGER SOUS FORME DE BANDES OU DE GOUTTES DES MATERIAUX COULANTS SUR UNE BANDE TRANSPORTEUSE

(30) Priorität: 03.06.1994 DE 4419491
(43) Veröffentlichungstag der Anmeldung: 22.05.1996
(73) Patentinhaber: Santrade Ltd., CH-6002 Luzern (CH)
(72) Erfinder: FROESCHKE, Reinhard, D-71384 Weinstadt (DE)
(74) Vertreter: Wilhelm & DausterPatentanwälteEuropean Patent Attorneys
(86) Internationale Anmeldenummer: EP9501964
(87) Internationale Veröffentlichungsnummer: WO9533551

(56) Entgegenhaltungen:
- DE-C- 4 119 021
- DE-C- 4 244 035

## Beschreibung

Die Erfindung betrifft eine Vorrichtung zum streifen-oder tropfenförmigen Ausbringen fließfähiger Massen auf ein unterhalb vorbeigeführtes Transportband, mit zwei relativ zueinander drehbaren Trommeln, die konzentrisch ineinander gelagert sind, wobei die drehbare äußere Trommel mit Öffnungen versehen ist, die durch Rotation zyklisch mit mindestens einer dem Transportband zugewandten und der Breite des Transportbandes entsprechenden Öffnung der feststehenden inneren Trommel zur Deckung bringbar sind, sowie mit einem die äußere Trommel in einem vom Transportband abgewandten Umfangsbereich umgebenden Einweiser, der um eine in einer Schwenkhalterung angeordnete, senkrecht zu der Achse der Trommeln stehende Achse vom Mantel der Trommel weg verschwenkbar angeordnet ist und in der Betriebsstellung parallel zu der Trommelachse durch eine koaxial an der feststehenden Trommel angreifende Haltevorrichtung gesichert ist.

Vorrichtungen dieser Art sind aus der DE 41 19 021 C1 bekannt, bei der zur Sicherung der schwenkbaren Einweiserhalterung ein Sporn mit einer Spitze vorgesehen ist, die in einer entsprechende Vertiefung im Zentrum der freien Stirnwand der feststehenden inneren Trommel gehalten ist. Bei dieser Bauart muß der axial verschiebbare Sporn mit Hilfe einer Rändelschraube in die ihm zugeordnete Vertiefung eingeführt werden, wenn die Einweiserhalterung gesichert werden soll; umgekehrt ist ein Aufschrauben notwendig, wenn die Einweiserhalterung zum Zweck der Wartung abgeschwenkt werden soll. Dies ist zum einen aufwendig, zum anderen wird, da der Formschluß nur durch das Eingreifen einer Spitze erreicht wird, eine wenig stabile Lagesicherung erreicht und schließlich hat sich auch gezeigt, daß Längenausdehnungen der feststehenden Trommel, die durch Temperaturen bewirkt sind, zu einem Verbiegen der Spornhalterung führen können, was zu einer nicht mehr parallelen Anordnung des Einweisers zur äußeren Trommel führt.

Der Erfindung liegt daher die Aufgabe zugrunde, bei einer Vorrchtung der eingangs genannten Art für eine stabile und auch gegen Längenänderungen unempfindliche Sicherung der Einweiserhaltung zu sorgen.

Zur Lösung dieser Aufgabe wird bei einer Vorrichtung der eingangs genannten Art vorgeschlagen, die innere Trommel etwas länger als die drehbare äußere Trommel auszubilden und die Haltevorrichtung aus einem drehbar am freien und über die drehbare Trommel hinausragenden Ende der feststehenden Trommel geführten Ring und aus einer radial am Ring lösbar befestigten Kupplungseinrichtung aufzubauen, die an dem von der Schwenkachse des Einweisers abgewandten Ende des Einweisers angeordnet ist. Durch diese Ausgestaltung kann die Einweiserhalterung formschlüssig und stabil in allen Betriebszuständen zu der inneren Trommel ausgerichtet gehalten werden, ohne daß Schwierigkeiten für das An- und Abschwenken bestehen. Der Ring kann in Weiterbildung der Erfindung an einer Führungsfläche der feststehenden Trommel so geführt sein, daß auch eine gewisse axiale Verschiebbarkeit gegeben ist. Axiale Ausdehnungen der Trommeln, die durch wechselnce Temperaturen bedingt sind, können so ausgeglichen werden. Eine Schiefstellen der Halterung und des Einweisers wird sicher verhindert.

In Weiterbildung der Erfindung kann der Ring an seinem Innendurchmesser auch noch mit an der feststehenden Trommelfläche anliegenden Ringen mit gewisser Elastizität versehen sein, so daß es auch möglich wird, allenfalls auftretende radiale Durchmesserveränderungen ausgleichen zu können. Die elastischen Ringe dienen gleichzeitig auch dafür, den Ring und die diesem zugeordnete Kupplungseinrichtung bei abgenommenen und abgeschwenktem Haltearm und Einweiser in einer bestimmten Position an der feststehenden Trommel zu halten, so daß bei der Rückschwenkung des Haltearmes ohne weiteres eine erneute Kupplung möglich ist.

Es hat sich als vorteilhaft erwiesen, wenn die Kupplungseinrichtung aus einem einem der beiden zu kuppelnden Teile zugeordneten Konus und aus einer dem anderen Teil zugeordneten Aufnahmehülse für den Konus besteht, wobei Konus und Aufnahmenülse über einen axialen Schraubzapfen miteinander verbindbar sind, der in einen Teil einer Rändelmutter eingreifen und mit deren Hilfe verspannt werden kann, so daß auch eine feste Verbindung zwischen der feststehenden Trommel und der Halterung des Einweisers gesichert ist.

Der Einweiser muß je nach herzustellendem Produkt seine Lage gegenüber der äußeren drehbaren Trommel in gewissem Umfang verändern. Da sein in der Drehrichtung hinteres Ende dafür sorgen soll, daß außen an der Trommel anhaftendes Material vor der Abtropfstelle in die Öffnungen der drehbaren Trommel zurückgedrückt wird, muß der vom Einweiser vor der Abtropfstelle freigelassene Umfang der drehbaren Trommel je nach der Größe eines herzustellenden pastillenartigen Produktes auch eine verschiedene Größe haben, was dadurch erreicht werden kann, daß der Einweiser entweder zur Abtropfstelle, d.h. also zum Transportband hin, oder nach der anderen Seite in Richtung zur oberen Hälfte der Trommeln verschoben wird. Dies ist bei den nekannten Vorrichtungen (De 41 19 021 C1) dadurch erreicht worden, daß man die gesamte Halterung des Einweisers mit diesem über einen scheibenförmigen Ring in einer Ausnehmung des ortsfesten Traggestelles geführt und dort mit Spannklauen gehalten hat. Eine Verschwenkung des Einweisers ist daher stets mit großen Aufwand verbunden gewesen.

Die vorliegende Erfindung vermeidet diesen Nachteil dadurch, daß der Haltearm mit Führungsplatten für den Einweiser versehen ist, die mit einer Kulissenführung für mit dem Einweiser verbundene Gleitteile versehen ist, wobei die Kulissenführung einem Kreisbogenabschnitt entspricht, dessen Mittelpunkt auf der Trommelachse liegt. Durch diese Ausgestaltung braucht für eine Verstellung der Position des Einweisers der Haltearm selbst nicht mehr aus seiner Lage verschoben werden. Es genügt, den Einweiser gegenüber dem Haltearm entsprechend zu verschieben, was durch die vorgesehene Kulissenführung äußerst einfach ist. Die Verstellung kann beispielsweise durch eine Verstellspindel geschehen, die zwischen Einweiser und Haltearm verläuft und die gewünschte Verschiebung des Einweisers in seiner Kulissenführung ermöglicht.

Bei einer vorteilhaften Ausführungsform ist die Kulissenführung als ein einen Viertelkreisbogen beschreibender Steg ausgebildet, an dem ein mit dem Einweiser verbundenes Gleitstück geführt ist, das den Steg mindestens teilweise umfaßt. Dieses Gleitstück kann zusätzlich durch Klemmschrauben gegenüber der Kulissenführung gesichert werden, wenn die gewünschte Einstellung über die Verstellspindel erfolgt ist. Dadurch wird eine ausreichende Lagesicherung erreicht.

Ein weiteres Problem bekannter Vorrichtungen der eingangs genannten Art besteht darin, daß auch die innere feststehende Trommel je nach Produkt um einen bestimmten Winkel vor der Betriebsaufnahme gegenüber dem Transportband verstellt werden muß, wenn ein einwandfreier Abtropfvorgang des Produktes erreicht werden soll. Man hat dieses bisher in der gleichen Weise erreicht, wie auch die Einweiserhalterung verstellt worden ist.

Der einseitig frei abkragende Rotoformer, der aus der feststehenden und aus der drehbaren Trommel besteht, hat auf seiner Befestigungsseite ein Lagergehäuse aufgewiesen, das ebenfalls an einer Tragplatte des Traggestelles in einer bestimmten Lage durch Klauen gesichert war. Wurde eine Verstellung notwendig, so wurden die Klauen, d.h. die Fixierung des Lagergehäuses, gegenüber dem Gestell gelöst, um die gewünschte Verstellung vorzunehmen. Diese Bauart bringt dabei die Gefahr mit sich, daß bei gelöstem Zustand der Schwenklagerung und bei einem unbeabsichtigten Einschalten des Drehantriebes für die äußere Trommel sich auch die innere, normalerweise feststehende Trommel mitdreht. Da mit dieser auf ihrer Lagerseite die Zuführschläuche für das Produkt und für das Heizmittel und dergleichen fest verbunden sind, kann bei einem solchen Vorgang die Gefahr auftreten, daß Schläuche sich verdrehen und beschädigt oder sogar zerstört werden, was dann, wenn diese Schläuche mit einem unter Druck stehenden und hohe Temperaturen aufweisenden Medium gefüllt sind, gefährlich sein kann.

Die Erfindung schlägt daher bei einer Vorrichtung der eingangs genannten Art mit einer um ihre Achse winkelverstellbar in einem ortsfesten Traggestell gehaltenen feststehenden Trommel vor, daß die Winkelverstellung der feststehenden Trommel mit Hilfe eines selbsthemmenden Schneckentriebes erfolgt, dessen Schneckenrad der Trommel und dessen Schneckenspindel dem ortsfesten Traggestell zugeordnet sind. Die Schneckenspindel kann mit einem Handrad versehen werden, das von außen zugänglich ist. Durch diese Maßnahme kann auch dann, wenn die Lagesicherung der inneren Trommel für einen Verstellvorgang gelöst ist, ein unerwünschtes Verdrehen der inneren Trommel verhindert werden, da deren Lage über den Schneckentrieb gesichert bleibt und erst bei Verdrehung des Handrades geändert werden kann.

Die Erfindung ist anhand eines Ausführungsbeispieles in der Zeichnung dargestellt und wird im folgenden erläutert. Es zeigen:
Fig. 1 eine schematische Draufsicht auf eine erfindungsgemäße Vorrichtung mit einem sogenannten Rotoformer und einem abschwenkbaren Einweiser, der in der Betriebsstellung und in einer abgeschwenkten Lage gezeigt ist,
Fig. 2 die Ansicht des Rotoformers der Fig. 1 in Richtung des Pfeiles II der Fig. 1 gesehen,
Fig. 3 den Schnitt durch die Einrichtung der Fig. 1 längs der Linie lll-lll,
Fig. 4 die Seitenansicht der Vorrichtung der Fig. 1 in Richtung des Pfeiles IV gesehen,
Fig. 5 die vergrößerte Teildraufsicht auf die Lagerstelle der Vorrichtung der Fig. 1,
Fig. 6 die vergrößerte und teilweise aufgeschnittene Teilansicht des freien Endes der Schwenkhalterung für den Einweiser,
Fig. 7 eine vergrößerte schematische Darstellung des Schnittes nach der Linie VII-VII in Fig. 1, und
Fig. 8 den Schnitt längs der Linie VIII-VIII durch Fig. 7.

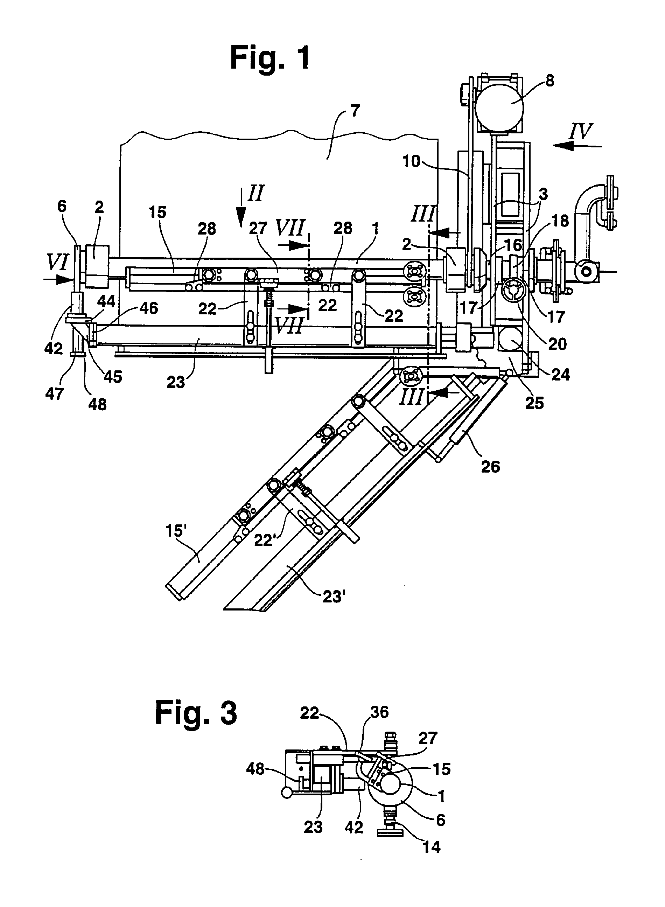

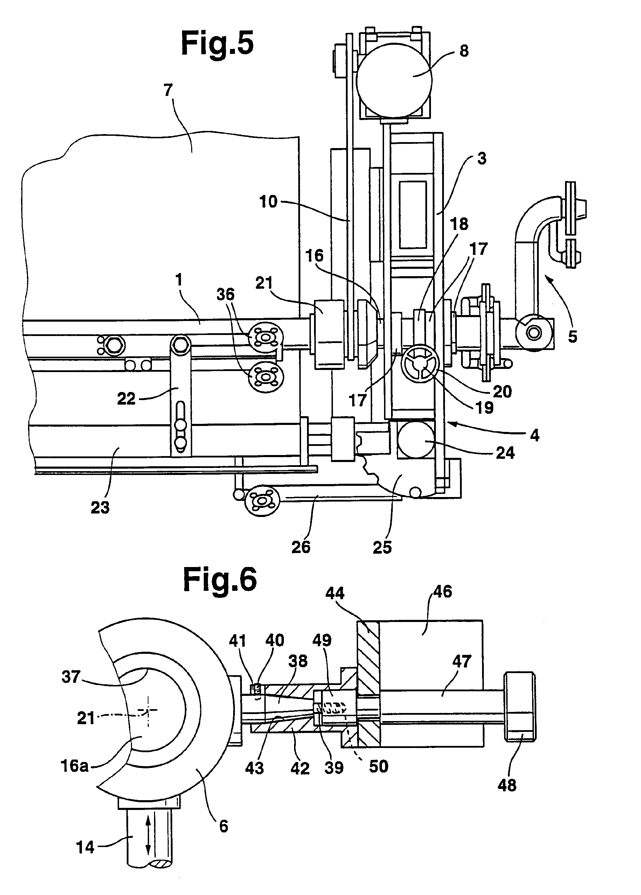

In den Fig. 1 bis 4 ist eine Vorrichtung zum Vertropfen von Schmelzen gezeigt, die nach dem in der Praxis unter dem Namen "Rotoform" bekannten Verfahren arbeitet. Diese Vorrichtung besteht aus zwei konzentrisch ineinander geführten Trommeln, von denen die äußere (1) in nicht näher gezeigter Weise auf ihrem gesamten Umfang und über nahezu die volle Länge mit Öffnungen versehen ist. Diese äußere rohrförmige Trommel (1) besitzt an beiden Enden Lager (2), mit denen sie auf der inneren zylindrischen Trommel drehbar gelagert ist. Die innere Trommel ist an ihrem rechten Ende zwischen zwei vertikalen Platten (3) eines Traggestelles (4) weitgehend fliegend gelagert und kann über an sich bekannte Anschlüsse (5) mit einer zu vertropfenden Schmelze und mit einem Heizmedium versorgt werden, das für eine Temperierung der Vorrichtung sorgt. Am freien, von den Lagerplatten (3) abgewandten Ende des nicht sichtbaren inneren Trommelkörpers ist ein Ring (6) vorgesehen (siehe auch Fig. 6), der auf einem zylindrischen Ende (16a) der inneren Trommel sitzt, das über das äußere Rohr (1) und dessen Lagerstelle (2) vorsteht. Die innere Trommel ist selbstverständlich und in bekannter Weise an diesem freien Ende geschlossen. Das ihr durch die Anschlüsse (5) zugeführte zu vertropfende Material wird dadurch nach unten, auf ein unter der Trommel (1) geführtes Transport- oder Kühlband (7) abgegeben, das die in der Trommel (1) vorgesehenen Öffnungen bei deren Rotation zyklisch mit einem Schlitz oder einer Reihe von Öffnungen in der inneren Trommel (16) zur Deckung kommen, die zum Transport- oder Kühlband (7) hin gerichtet sind.

Um die Rotation der äußeren Trommel (1) zu bewirken, ist ein Antriebsmotor (8) vorgesehen, dessen Antriebswelle (9) über eine Kette (10) ein fest mit der Trommel (1) verbundenes Zahnrad (11) antreibt.

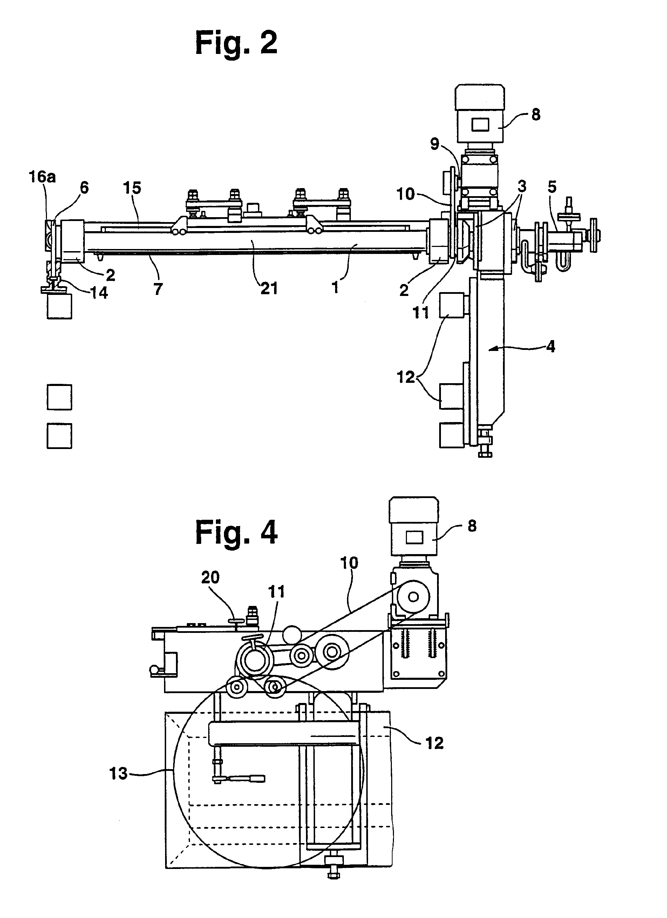

Das Traggestell (4) ist an dem Traggestell (12) eines nicht näher dargestellten Kühlbandes angebracht, in dem auch eine aus Fig. 4 ersichtliche Umlenktrommel (13) angeordnet ist, über die das Transport-oder Kühlband (7) geführt ist. An dem am freien Ende der inneren Trommel angeordneten Ring (6), auf den noch zurückgekommen wird, legt sich von unten eine Abstützeinrichtung (14) an, die beim Ausführungsbeispiel als eine Mikrometerschraube ausgebildet ist. Durch diese Anordnung erfährt der Rotoformer auch auf der von seiner Lagerung an den Platten (3) abgewandten Seite eine einstellbare Abstützung, mit der es möglich ist, insbesondere dann, wenn das Transport-oder Kühlband (7) ganz nahe an die äußere Trommel (1) herangerückt werden soll, einen über die gesamte Bandbreite exakten Abstand zwischen Trommel (1) und Band (7) zu erreichen.

Die innere Trommel ist in gewissem Umfang winkelverstellbar zwischen den beiden Platten (3) angeordnet. Eine solche Verstellung ist z.B. dann erforderlich, wenn von der Herstellung eines Produktes auf ein anderes übergegangen werden soll und wenn zu diesem Zweck der Abtropfpunkt für die Schmelze gegenüber dem Transport- und Kühlband (7) etwas verändert, beispielsweise gegenüber einer durch die Trommelachse verlaufenden Vertikalebene etwas entgegen der Bandlaufrichtung vor- oder in Bandlaufrichtung nachverstellt werden soll. Dies wird dadurch erreicht, daß der innere, im Betrieb dann feststehende Trommelkörper (16) im Bereich zwischen den beiden Lagerplatten (3), d.h. im Bereich zwischen seinen beiden Lagern (17) mit einem Schneckenrad (18) versehen wird, das fest mit ihm verbunden ist und durch eine den Figuren nur andeutungsweise zu sehende Schneckenspindel (19) über ein Handrad (20) verstellbar ist. Das Schneckengetriebe ist dabei so ausgelegt, daß es selbsthemmend wirkt. Werden daher die für die einmal eingestellte Lage des inneren Trommelkörpers (16) vorgesehenen Arretiervorrichtungen gelöst, so kann selbst dann eine ungewollte Verdrehung des inneren Trommelkörpers (16) nicht eintreten, wenn aus irgend einem Grund der Antrieb (8) eingeschaltet wird. Die Selbsthemmung des Schneckengetriebes hält den inneren Trommelkörper (16) in seiner Lage fest. Die Gefahr, daß sich bei gelöster Lagerung der inneren Trommel (16) daher diese mit den Anschlüssen (5) und nicht gezeigten Schlauchanschlüssen verdreht, besteht daher nicht.

An der äußeren Trommel (1) liegt ein Einweiser (15) an, dessen Länge in etwa der Abtropfbreite entspricht. Dieser Einweiser, der beheizt ist, dient dazu, an der äußeren Trommel (1) anhaftende Produktreste, die den Abtropfvorgang stören könnten, vor der Abtropfstelle wieder in die Öffnungen zurückzudrücken. Da dieser Einweiser (15), aber auch die Umfangsfläche der Trommel (1), z.B. zu Wartungszwecken, zugängig gemacht werden muß, ist der Einweiser (15) über Tragarme (22) mit einem Schwenkarm (23) verbunden, der am Traggestell (4) um eine senkrecht zu der Achse (21) der Trommeln (1 und 16) verlaufende Schwenkachse (24) vom Umfang der Trommel (1) wegschwenkbar und beispielsweise in die Lage (23') bewegbar ist. Der Schwenkachse (24) und der Lagerung des Schwenkarmes (23) ist eine viertelkreisförmige Rasteinrichtung (25) mit drei Rastausnehmungen zugeordnet, die mit einer nicht näher gezeigten Raste an dem Schwenkarm (23) zusammenwirken und diesen beispielsweise in der Stellung (23') arretieren können. Mit dem Schwenkarm (23) steht außerdem ein Dämpfzylinder (26) in Verbindung, der an der ortsfesten Rastscheibe (24) angelenkt ist. Dieser Dämpfzylinder (26) ist aus Sicherheitsgründen vorgesehen um zu verhindern, daß beispielsweise dann, wenn die Rastung des Schwenkarmes (23) unbeabsichtigt ausrastet, der Schwenkarm, der nach oben abgeklappt ist, zu schnell zufällt und beispielsweise der eine Wartung durchführenden Person Schaden zufügt.

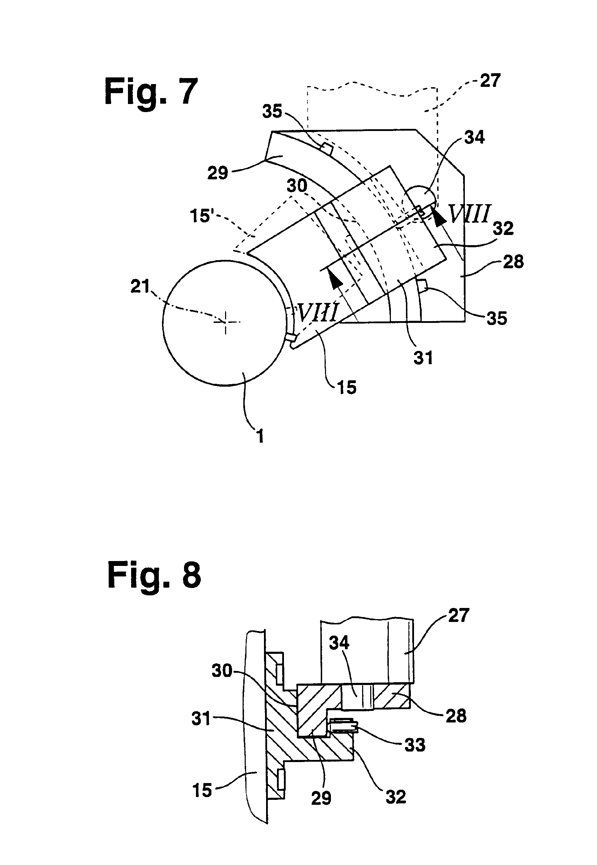

Mit den Haltearmen (22) verbunden ist eine Halterung (27) an der, wie den Fig. 7 und 8 zu entnehmen ist, zwei Führungsplatten (28) befestigt sind, die jeweils mit einem Steg (29) in der Form eines Viertelkreisbogens versehen sind. Dieser Viertelkreisbogen (29) besitzt einen Mittelpunkt, der auf der Achse (21) der Trommeln (1, 16) liegt. An diesem Viertelkreisbogen sitzt der Einweiser mit einer Halterung (31), die einen der Innenkrümmung des Steges (29) angepaßten Führungsteil (30) und einen den Steg (29) U-förmig übergreifenden Führungsrand (32) aufweist, in dem eine Klemmschraube (33) angeordnet ist. Der Einweiser (15) läßt sich daher an dem Viertelkreissteg (29) in gewissem Umfang relativ zu der Trommel (1) verstellen, ohne daß zu diesem Zweck der Schwenkarm (23) verstellt werden mü ßte.

Die Führungsplatten (28) sind beim Ausführungsbeispiel über Bolzen (34) mit der Halterung (27) verbunden. Dem Viertelkreissteg (29) sind zwei Anschläge (35) zugeordnet, so daß in sehr einfacher Weise eine Schnelleinstellung des Einweisers (15) von der in der Fig. 7 dargestellten in die gestrichelt dargestellte zweite Lage (15') möglich ist.

Um den Haltearm (23) und damit den Einweiser (15), der im übrigen Anschlüsse (36) für den Zu- und Abfluß eines Heizmittels aufweist, in einer korrekt ausgerichteten Lage zu der Trommel (1) zu halten, ist, wie vorher schon angedeutet und in der Fig. 6 gezeigt, auf das freie, über die Trommel (1) hinausstehende Ende (16a) ein Ring (6) geschoben, der an seinem Innenumfang mit elastischen Ringen (37) versehen ist, aie in Fig. 6 angedeutet sind. Der Ring (6) sitzt auf einem zylindrischen Abschnitt (16a) der feststehenden Trommel (16). Er kann sich daher in Axialrichtung gegenüber der feststehenden Trommel (16) etwas verschieben, wenn sich diese, bedingt durch Temperaturänderungen, axial ausdehnen sollte.

Der Ring (6) ist fest mit einem seitlich abstehenden Konus (38) versehen, der an seinem freien Ende mit einem Schraubzapfen (39) versehen ist. Eine in einem zylindrischen Teil vor dem Konus (38) eingesetzte Stiftschraube (40) greift zur Verdrehsicherung in einen Schlitz (41) einer Hülse (42) ein, die eine dem Konus (38) angepaßte innere Ausnehmung (43) besitzt. Die Hülse (42) ist fest mit einer Stützplatte (44) verbunden, die wiederum über ein Zwischenstück (45) und einen rechtwinklig zu ihr verlaufenden Flansch (46) mit dem Schwenkarm (23) verbunden ist. In der Stützplatte (44) ist drehbar eine Hülse (47) gelagert, die an ihrem freien Ende mit einem gerändelten Handrad (48) versehen ist. Die Hülse (47) besitzt ein in eine der konischen Ausnehmung (43) vorgelagerte Ausnehmung der Hülse (42) hereinragenden Kopf in dem eine Gewindebohrung (50) angeordnet ist, deren Gewinde dem Gewinde des Schraubzapfens (39) entspricht. Die Verbindung zwischen dem Schwenkarm (23) und dem freien Ende (16a) der Trommel (16) wird daher über den Ring und dessen Konus (38) und über die Hülse (42) erreicht. Der durch den Konus (38) gegebene paßgenaue Sitz wird durch die Schraubhülse (49) gesichert. Nach Lösen der Schraubhülse (49) mit Hilfe der Rändelmutter (48) kann der Schwenkarm (23) mit dem Einweiser (15) abgeschwenkt und beispielsweise in der Lage (23') (siehe Fig. 1) arretiert werden. Durch die neue Ausgestaltung ist eine einwandfreie Ausrichtung des Einweisers zur Trommel (1) möglich, ohne daß Schwierigkeiten für einen gewünschten Abschwenkvorgang bestehen.

## Patentansprüche

1. Vorrichtung zum streifen- oder tropfenförmigen Ausbringen fließfähiger Massen auf ein unterhalb vorbeigeführtes Transportband (7) mit zwei relativ zueinander drehbaren Trommeln (16, 1) die konzentrisch ineinander gelagert sind, wobei die drehbare äußere Trommel (1) mit Öffnungen versehen ist, die durch Rotation zyklisch mit mindestens einer dem Transportband (7) zugewandten und der Breite des Transportbandes entsprechenden Öffnung der feststehenden inneren Trommel (16) zur Deckung bringbar sind, sowie mit einem die äußere Trommel (1) in einem vom Transportband (7) abgewandten Umfangbereich umgebenden Einweiser (15), der um eine in einer Schwenkhalterung (25) angeordnete Achse (24) vom Mantel der Trommel (1) wegschwenkbar angeordnet ist und in der Betriebsstellung parallel zu der Trommelachse (21) durch eine koaxial an der feststehenden Trommel angreifende Haltevorrichtung gesichert ist, dadurch gekennzeichnet,
daß die innere Trommel (16) etwas länger als die drehbare äußere Trommel (1) ausgebildet ist und über die drehbare Trommel am freien Ende (16a) hinausragt, und daß die Haltevorrichtung aus einem drehbar an diesem freien Ende (16a) der feststehenden Trommel (16) geführten Ring (6) und aus einer radial am Ring lösbar befestigten Kupplungseinrichtung (38, 42) besteht, die an dem von der Schwenkachse (24) abgewandten Ende des Einweisers angeordnet ist.

2. Vorrichtung nach Anspruch 1, dadurch gekennzeichnet, daß der Ring (6) an einer Führungsfläche der feststehenden Trommel (16) so geführt ist, daß eine gewisse axiale Verschiebbarkeit gegeben ist.

3. Vorrichtung nach Anspruch 1 und 2, dadurch gekennzeichnet, daß der Ring (6) an seinem Innendurchmesser mit elastisch an der feststehenden Trommel (16, 16a) anliegenden Ringen (37) versehen ist.

4. Vorrichtung nach Anspruch 1, dadurch gekennzeichnet, daS die Kupplungseinrichtung aus einem einen der beiden zu kuppelnden Teile zugeordneten Konus (38) und aus einer dem anderen Teil zugeordneten Aufnahmehülse (42) für den Konus besteht.

5. Vorrichtung nach Anspruch 4, dadurch gekennzeichnet, daS der Konus (38) und die Aufnahmehülse (42) über einen axial verlaufenden Schraubzapfen (39) ineinander gesichert sind.

6. Vorrichtung nach Anspruch 5, dadurch gekennzeichnet, daß der Schraubzapfen (39) mit einer an der Halterung (23) für den Einweiser (15) drehbar gelagerten Rändelmutter (49, 48) in Verbindung steht.

7. Vorrichtung nach Anspruch 1, dadurch gekennzeichnet, daß für den Einweiser (15) ein Haltearm (27) vorgesehen ist, der mit dem Schwenkarm (23) verbunden ist, und daß dieser Haltearm (27) mit Führungsplatten (28) für den Einweiser (15) versehen ist, die mit einer Kulissenführung (29) für mit dem Einweiser verbundene Gleitteile (30, 32) versehen ist, wobei die Kulissenführung einem Kreisbogenabschnitt entspricht, dessen Mittelpunkt auf der Trommelachse (21) liegt.

8. Vorrichtung nach Anspruch 7, dadurch gekennzeichnet, daß die Kulissenführung als ein einen Viertelkreisbogen beschreibender Steg (29) ausgebildet ist, an dem ein mit dem Einweiser verbundenes Gleitstück (30) geführt ist, dem ein den Steg (29) mindestens teilweise umfassendes Klemmstück (32) zugeordnet ist.

9. Vorrichtung nach Anspruch 1 mit einer um ihre Achse (21) winkelverstellbar in einem ortsfesten Traggestell (4) gehaltenen feststehenden Trommel (16),
dadurch gekennzeichnet,
daß die Winkelverstellung der feststehenden Trommel (16) mit Hilfe eines selbsthemmenden Schnekkentriebes (18, 19) erfolgt, dessen Schneckenrad (18) der Trommel (16) und dessen Schneckenspindel (19) dem ortsfesten Traggestell (4) zugeordnet sind.

10. Vorrichtung nach Anspruch 9, dadurch gekennzeichnet, daß die Schneckenspindel (19) mit einem Handrad (20) versehen ist.

## Claims

1. A device for yielding free-flowing masses in strip or droplet form onto a conveyor belt (7) passing beneath with two drums (16, 1) which can be rotated in relation to one another and which are fixed concentrically one inside the other, whereby the outer rotatable drum (1) is provided with openings which by means of rotation can be moved cyclically to cover at least one opening on the fixed inner drum (16) which faces the conveyor belt (7) and is the same width as the conveyor belt, and with a pointer (15), which surrounds the area of the circumference of the outer drum (1) facing away from the conveyor belt (15), which is positioned in such a way that it can be pivoted away from the casing of the drum (1) about an axis (24) located in a pivoting retainer (25) and in operating position is secured parallel to the drum axis (21) by means of a retaining device which is attached coaxially to the fixed drum, characterised in that the inner drum (16) is somewhat longer than the rotatable outer drum (1) and protrudes beyond the rotatable drum at its free end (16a), and that the retaining device consists of a ring (6) which is joined in rotatable manner to this free end (16a) of the fixed drum (16) and a coupling device (38, 42), which is fixed radially to the ring (6) in such a manner that it can be detached, and which is positioned at the end of the pointer facing away from the axis of pivoting (24).

2. A device in accordance with Claim 1, characterised in that the ring (6) is joined to a guide surface on the fixed drum (16) in such a way that a certain axial clearance is created.

3. A device in accordance with Claims 1 and 2, characterised in that the internal diameter of the ring (6) is provided with rings (27) which are elasticity adjacent to the fixed drum (16, 16a).

4. A device in accordance with Claim 1, characterised in that the coupling device consists of a cone (38) which is connected to one of the two parts to be coupled and a receiving sleeve (42) for the cone which is connected to the other part.

5. A device in accordance with Claim 4, characterised in that the cone (38) and the receiving sleeve (42) are secured one inside the other by means of an axially running screw pin (39).

6. A device in accordance with Claim 5, characterised in that the screw pin (39) is connected to a knurled nut (49, 48) which is fixed to the retainer (23) for the pointer (15) in such a way that it can rotate.

7. A device in accordance with Claim 1, characterised in that a retaining arm (27) is provided for the pointer (15) which is connected to the pivoting arm (23) and that this retaining arm (27) is provided with guide plates (28) for the pointer (15) which is provided with a connecting guide (29) for sliding parts (30, 32) connected to the pointer, whereby the connecting guide corresponds to a section of an arc of a circle with its mid-point lying on the drum axis (21).

8. A device in accordance with Claim 8, characterised in that the connecting guide is designed as a strip (29) which describes a quarter arc of a circle to which a sliding part (30) connected to the pointer is joined, which sliding part is in turn connected to a clamping piece (32) which at least partially surrounds the strip (29).

9. Advice in accordance with Claim 1 with a fixed drum (16) which can be angled about its axis (21) in a fixed supporting structure (4), characterised in that the angled adjustment of the fixed drum (16) is effected with the help of a self-locking worm drive (18, 19) whereby the worm wheel (18) is connected to the drum (16) and the worm spindle (19) is connected to the fixed supporting structure (4).

10. A device in accordance with Claim 9, characterised in that the worm spindle (19) is provided with a hand wheel (20).

## Revendications

1. Dispositif permettant d'évacuer sous forme de bandes ou de gouttes des masses coulantes sur une bande transporteuse (7) guidée et passant au-dessous avec deux tambours (16, 1) rotatifs l'un par rapport à l'autre qui sont logés de façon concentrique l'un dans l'autre, le tambour (1) extérieur rotatif étant pourvu d'ouvertures, qui peuvent être amenées par rotation pour coïncider de façon cyclique avec au moins une ouverture, tournée vers la bande transporteuse (7) et correspondant à la largeur de la bande transporteuse, du tambour (16) intérieur fixe, et avec un guide (15) entourant le tambour (1) extérieur dans une zone périphérique opposée à la bande transporteuse (7), lequel guide est disposé de façon à pouvoir basculer autour d'un axe (24) disposé dans un support basculant (25) en s'éloignant de l'enveloppe du tambour (1) et est bloqué dans la position de service parallèlement à l'axe du tambour (21) par un dispositif de retenue s'appliquant de façon coaxiale sur le tambour fixe, caractérisé en ce que le tambour intérieur (16) est un peu plus long que le tambour (1) extérieur pivotant et dépasse du tambour pivotant à l'extrémité libre (16a), et en ce que le dispositif de retenue comprend une bague (6) guidée de façon pivotante sur cette extrémité libre (16a) du tambour (16) fixe et un système de couplage (38, 42) fixé de façon radiale et amovible sur la bague, lequel système est disposé sur l'extrémité du guide opposée à l'axe de pivotement (24).

2. Dispositif selon la revendication 1, caractérisé en ce que la bague (6) est guidée sur une surface de guidage du tambour (16) fixe de façon qu'il existe une certaine possibilité de déplacement axial.

3. Dispositif selon les revendications 1 et 2, caractérisé en ce que la bague (6) est pourvue sur son diamètre intérieur de bagues (37) appliquées de façon élastique sur le tambour fixe (16, 16a).

4. Dispositif selon la revendication 1, caractérisé en ce que le système de couplage comprend un cône (38) attribué à l'une des deux parties à accoupler et une douille de logement (42) attribuée à l'autre partie pour le cône.

5. Dispositif selon la revendication 4, caractérisé en ce que le cône (38) et la douille de logement (42) sont bloqués l'un dans l'autre par un tenon à vis (39) se déplaçant dans le sens axial.

6. Dispositif selon la revendication 5, caractérisé en ce que le tenon à vis (39) est relié à un écrou moleté (49, 48) logé de façon pivotante sur la fixation (23) pour le guide (15).

7. Dispositif selon la revendication 1, caractérisé en ce qu'il est prévu pour le guide (15) un bras de retenue (17), qui est relié au bras pivotant (23), et en ce que ce bras de retenue (27) est pourvu de plaques de guidage (28) pour le guide (15), qui sont pourvues d'un guide à coulisse (29) pour les parties coulissantes (30, 32) reliées au guide, le guide à coulisse correspondant à une partie d'un arc de cercle, dont le centre se situe sur l'axe du tambour (21).

8. Dispositif selon la revendication 7, caractérisé en ce que le guide à coulisse est conçu comme une barrette (29) décrivant un quart de circonférence, sur laquelle est guidée une pièce coulissante (30) reliée au guide, à laquelle est attribuée une pièce de blocage (32) entourant au moins partiellement la barrette (29).

9. Dispositif selon la revendication 1 avec un tambour (16) fixe, réglable en angle autour de son axe (21) et retenu dans un cadre porteur (4) stationnaire, caractérisé en ce que le réglage d'angle du tambour (16) fixe s'effectue à l'aide d'un engrenage autobloquant à vis sans fin (18, 19), dont la roue (18) et la broche (19) sont attribuées respectivement au tambour (16) et au cadre porteur fixe (4).

10. Dispositif selon la revendication 9, caractérisé en ce que la broche à vis sans fin est pourvue d'un boulon (20).
